(19) **Europäisches Patentamt**
**European Patent Office**
**Office européen des brevets**

(11) **EP 2 172 920 B1**

(12) **EUROPEAN PATENT SPECIFICATION**

(45) Date of publication and mention
of the grant of the patent:
**07.12.2011 Bulletin 2011/49**

(51) Int Cl.:
**G08G 1/16** *(2006.01)* **G05D 1/02** *(2006.01)*
**B60W 30/08** *(2006.01)* **B60W 50/00** *(2006.01)*

(21) Application number: **08165606.8**

(22) Date of filing: **01.10.2008**

(54) **Threat assessment for unexpected events**

Bedrohungsbewertung für unerwartete Ereignisse

Évaluation de la menace pour des événements inattendus

(84) Designated Contracting States:
**DE GB SE**

(43) Date of publication of application:
**07.04.2010 Bulletin 2010/14**

(73) Proprietor: **Volvo Car Corporation**
**405 31 Göteborg (SE)**

(72) Inventors:
• **Brännström, Mattias**
**414 81, Göteborg (SE)**

• **Jansson, Jonas**
**589 37, Linköping (SE)**
• **Birk, Wolfgang**
**954 35, Gammelstad (SE)**

(74) Representative: **Andersson, Per Rune**
**Albihns.Zacco**
**Torggatan 8**
**Box 142**
**401 22 Göteborg (SE)**

(56) References cited:
**FR-A- 2 835 081    US-A1- 2007 282 530**

EP 2 172 920 B1

## Description

TECHNICAL FIELD

The present invention relates to an onboard warning system for a host vehicle, a system comprising a sensor system detecting a presence of external objects within a sensor detection area and an external object movement determination unit arranged to determine a measure of a relative acceleration of said external objects to said host vehicle.

BACKGROUND ART

In general active safety systems consist of two sub-systems, namely a threat assessment subsystem that aims at estimating the needed effort by the host vehicle to avoid an accident, often referred to as the *threat level,* and a decision-making subsystem that determines when and how to intervene based on the estimated threat level and the actions/state of the driver of the host vehicle.

There are often several active safety systems in a host vehicle. Each system has a threat assessment algorithm that evaluates one accident type, e.g. rear-end collisions, head-on collisions or intersection collisions. There is a decision-making algorithm that makes the final decision based on the outputs from all sub-decision-making algorithms.

The timing of interventions for active safety systems is a trade-off between effectiveness of the system and the risk of having a false alarm.

Interventions by active safety systems of today are made when it is estimated that an accident is difficult to avoid or when the driver of the host vehicle makes a large mistake.

Even if existing active safety systems are suitable for assessing critical situations at a late stage and may intervene as a result of such an assessment, it is a general desire to enable a system of early assessment of a traffic situation without resulting in an excessive amount of interventions in events where a conflict situation can and will be avoided without an intervention.

FR 2 835 081 discloses an onboard warning system for a host vehicle, a system comprising a sensor system detecting a presence of external objects within a sensor detection area and an external object movement determination unit arranged to determine a measure of a relative movement of the external objects relative to the host vehicle, the warning system further includes:

a host vehicle movement determination unit arranged to determine a relative movement of the host vehicle to a ground fixed coordinate system;

a unit for determination of a measure of a relative velocity of the external objects to the host vehicle using the relative movement of the host vehicle determined by the host vehicle movement determination unit; and

a warning signal generator arranged to generate a warning signal when the measure of the relative velocity of the external objects in the sensor detection area exceeds a threshold value.

US 2007 0282530 A1 discloses an onboard warning system for a host vehicle, a system comprising a sensor system detecting a presence of external objects within a sensor detection area and an external object movement determination unit arranged to determine a measure of a relative movement, relative velocities Vrel, of the external objects to the host vehicle, the warning system further includes:

a host vehicle movement determination unit arranged to determine a relative movement, velocity V, of the host vehicle to a ground -fixed global coordinate system (X,Y);

a unit for determination of a measure of absolute velocities of the external objects to the ground - fixed coordinate system, relative to the host vehicle using the relative movement of the host vehicle determined by the host vehicle movement determination unit; and

a warning signal generator arranged to generate a warning signal.

SUMMARY OF THE INVENTION

The object of the invention is to provide a system suitable for early assessment of a traffic situation without resulting in an excessive amount of interventions in events where a conflict situation can and will be avoided without an intervention.

The invention is based on the observation than situations which result in an accident are often preceded by an unusual manoeuvre made by a vehicle. A sequence of events resulting from this unusual manoeuvre may lead to an accident.

According to the invention, the unusual event is detected by observing the absolute acceleration of external objects with reference to a ground-fixed coordinate system. In the event when the absolute acceleration of the external object exceeds a threshold value a warning signal may be generated.

The object of the invention is hence achieved by an onboard warning system for a host vehicle including a system comprising a sensor system detecting a presence of external objects within a sensor detection area and an external object movement determination unit arranged to determine a measure of a relative acceleration of said external objects to said host vehicle.

According to the invention, the warning system further includes a host vehicle movement determination unit arranged to determine a relative movement of said host vehicle to a ground-fixed coordinate system; a unit for determination of a measure of an absolute acceleration of said external objects to said ground-fixed coordinate system by transformation of the measure of the relative acceleration of said external objects to said host vehicle into said ground-fixed coordinate system using the relative movement of said host vehicle determined by said host vehicle movement determination unit; and a warning signal generator arranged to generate a warning signal of an event when said measure of said absolute acceleration of said external objects relative to said fixed ground acceleration system in the sensor detection area exceeds a threshold value.

Since the warning signal is based on the level of absolute acceleration of the external objects, the onboard warning system is not based on the threat level of the external object relative to the host vehicle. Instead, the system relies on an observation of an unusual event that is statistically overrepresented as a cause of a series of actions that finally may lead to an accident.

The observation of an absolute acceleration for an external object exceeding the threshold level thus calls for alerting a driver of the host vehicle by generating a warning signal.

Optionally, the external object movement determination unit is arranged to determine a current heading direction of said external objects. This enables the onboard warning system to set different threshold values for the absolute acceleration of the external object relative to a ground-fixed coordinate system in different directions with respect to the current heading direction of the external object. Optionally, the threshold value is a vector value where a higher value is assigned for positive acceleration in the current heading direction of the vehicle, which corresponds to voluntary acceleration, and a lower value is assigned for negative acceleration in the current heading direction, which corresponds to braking. The acceptance for acceleration in the direction vertical to the current heading direction is mainly dependent on the curvature radius of the road on which the external object is positioned on. In a first approximation, the threshold value for vertical acceleration is set to be equal to the threshold value for negative acceleration. However, in the event the curvature radius of the road at the location of the external object is accessible, for instance via a GPS signal locating the host vehicle and a position of the external object relative to the host vehicle derived from an onboard traffic surrounding assessment system which is capable of monitoring the position and movement of external objects relatively to the host vehicle, the threshold value in the direction vertical to the extension of the road is set to be low. Practically, the vector value threshold is set to be lower in the negative direction with reference to the current heading of the external object and higher in the positive direction. The threshold value may assume a smooth transition in between these directions.

The threshold value can be varied depending on the requirements and the purpose of the warning system. If the threshold value is low, e.g. 4 m/s$^2$, and thus the tolerance for "unnecessary" warnings is high, the system can be considered as a comfort information system that more or less guides the driver through the traffic flow.

If the threshold value is high, e.g. 10 m/s$^2$, the system will have very low tolerance for false warning signals, and is considered as safety equipment in a vehicle.

Another factor to take into consideration is the time during which the high relative acceleration of an external object is detected. If the time interval is fairly short, e.g. less than 0.5 s, the system should not provide any warning, since such short a change in the external object's driving behaviour is unlikely to cause an accident. On the other hand, the warning should not be given too late. If the time interval when the relative acceleration exceeds the threshold value is longer than 5 s, a possible accident might already have occurred, thus making the warning redundant.

Suitably, the threshold values are selected in the interval between 4-10 m/s$^2$, preferably the threshold value is selected in the interval 6.5-8 m/s$^2$, still more preferably in the interval 6.8-7.2 m/s$^2$.

As has been indicated above, the threshold value can be selected as an absolute value, whereby the absolute acceleration is measured independently of the current heading direction of the external object. In this event the acceptance for acceleration is equal in all directions of the external object.

Alternatively, as has been indicated above, the threshold value can be a vector value wherein the value of the threshold $A_{th}$ is dependent on the direction of the acceleration. Suitably, the threshold value in the direction of the current heading of the external object is higher than the threshold value in the opposite direction. As an example, the threshold value in the heading direction is suitably selected between 8-10 m/s$^2$, while the threshold value in the opposite direction is selected between 6.8-7.2 m/s$^2$. In the direction vertical to the heading direction (in the transversal direction to the heading direction), the threshold value may be set between the values in the heading direction and in the opposite direction. In the event the extension of the road is known and the movement of the external objects can be located in a road fixed coordinate system, the acceptance for acceleration in a direction transverse to the road is low. In this event the threshold value can suitably be selected between 4 and 6 m/s$^2$.

The absolute acceleration $a_{abs}$ is determined in a time window •t. Suitably, the absolute acceleration $a_{abs}$ is defined as $a_{abs}$=• v/• t, where •v is the difference in velocity relative to a ground-fixed coordinate system. The time window is suitably selected to be an interval having an extension between 0.2 and 5 seconds, suitably between 1-3 seconds, preferably around 2 seconds.

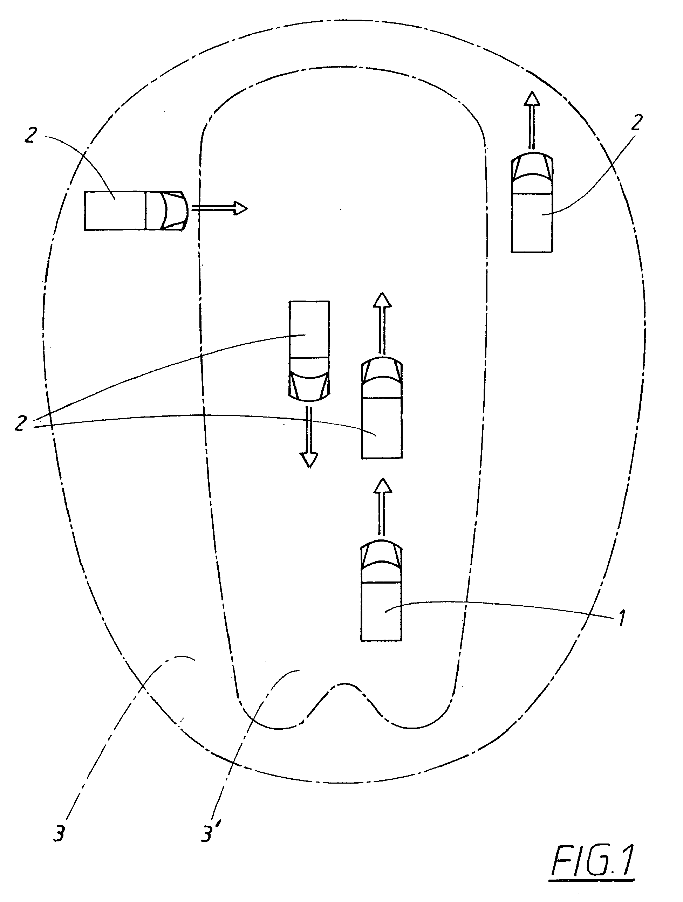

Optionally, the determination of whether the absolute acceleration of the external object exceeds a threshold value is performed within an area of interest inside the detection area where the absolute acceleration may be detected. The area of interest may have a shape as indicated in Fig. 1. Suitably, the area of interest has an extension in the heading direction of the host vehicle corresponding to a distance travelled by the host vehicle during 3-6 seconds at its current speed in the heading direction, an extension in the direction opposite to the heading direction of the host vehicle corresponding to a distance travelled by the host vehicle during 0.5-1.5 seconds at its current speed in the heading direction, an extension in a direction inclined 45 degrees with a direction opposite to the heading direction of the host vehicle corresponding to a distance travelled by the host vehicle during 1.2-2.5 seconds at its current speed in the heading direction. Optionally, the area of interest discriminates external objects that are considered to be in a different plane form the plane on which the host vehicle is present. This may be achieved in the event when the system includes an onboard traffic surrounding assessment system which may locate the position of external objects in relation to retrieved information relating to the location of the roads on which the host vehicle and the external objects are positioned on. For example, in the event when it is determined that the external object is positioned on a bridge above the road on which the host vehicle travels, the information relating to the absolute acceleration of the external object may be discarded.

Optionally, the invention may be used in combination with a system that utilizes threat assessment devices. In this event it should be noted that the threshold value for the absolute acceleration of the external object is suitably independent of the threat value determined in the threat assessment device. Optionally, the threat levels at which interventions are to be made may depend on whether the absolute acceleration of an external object within the detection area or within the area of interest detected by the onboard warning system according to the invention as described above exceeds the threshold value. In the event when it has been detected that the threshold value for the absolute acceleration of an external object has been exceeded, the threat levels at which an active safety system intervenes may then be decreased such that an intervention is made at an earlier stage.

The warning signal from the onboard warning system according to the invention as disclosed above may thus be given as input to the decision-making algorithm. Thus, if another vehicle puts the host vehicle in a dangerous situation, an intervention by the host vehicle may be made at an earlier point in time compared to the active safety system not including an onboard warning system according to the invention as described above. This will give the driver of the host vehicle, or an autonomous system, a better chance to avoid an accident with a smaller effort. Since the dangerous situation was caused by the actions of another motorist, it is clear that the situation was not intended by the driver of the host vehicle and an early intervention can be given without increasing the false alarm rate.

Implementing a situation assessment device according to the invention may improve the trade-off between effectiveness and false alarm rate for the decision-making algorithm by identifying and classifying critical traffic situations that often lead to accidents. For these particular situations, the criteria for an intervention are temporarily changed so that the intervention is more effective, e.g. the intervention is made at an earlier point in time, the host vehicle autonomously brakes harder, etc. Also, the higher expected severity of the potential accident is, the earlier the intervention is given.

On an implementation level, an additional subsystem may be implemented between a threat assessment subsystem and a decision-making subsystem. Modifications are not needed in the threat assessment subsystem. Slight interface modifications are needed in the decision-making subsystem.

A situation can also be said to be critical if an unusual event is identified, e.g. a lead vehicle performs full braking at highway speed or a large animal is entering the road.

These criteria will enable effective interventions in conflict situations that are completely or partly caused by another motorist. Active safety systems that utilize the present invention will have increased focus on mistakes made by other motorists, rather than focusing only on mistakes made by the driver of the host vehicle.

BRIEF DESCRIPTION OF THE DRAWINGS

In the following text, the invention will be described in detail with reference to the attached drawings. These drawings are used for illustration only and do not in any way limit the scope of the invention. In the drawings:

 Fig. 1 shows a vehicle equipped with an onboard warning system;

 Fig. 2 is a schematic of an onboard warning system according to the invention;

 Figs. 3-6 are schematic representations of various traffic scenarios.

DETAILED DESCRIPTION

In the following text an embodiment of the present invention will be described in detail.

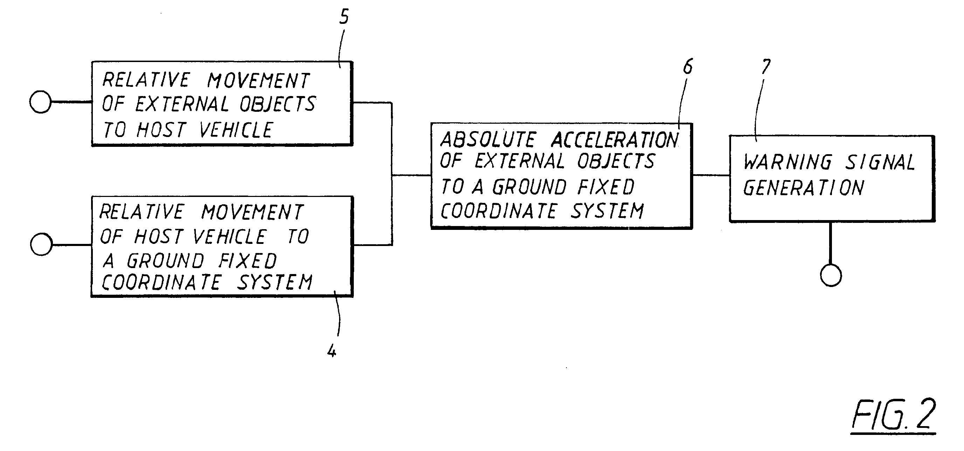

In Fig. 1, a host vehicle 1 equipped with an onboard warning system according to the present invention is shown. External objects 2 are detected in the sensor detection area 3. Within the sensor detection area 3 an area of interest 3' is shown. Even if the absolute acceleration is detectable within the whole of the sensor detection area 3, optionally the use of the information retrieved from the sensors may be used solely within the area of interest 3'. Fig. 2 illustrates different components of the onboard warning system according to the present invention. An external object movement determination unit 5 determines the movement of external objects relative to said host vehicle 1. The movement can be expressed in coordinates $(R(t),\bullet(t))$ expressing the distance and angle to an external object relative to the host vehicle having an origin preferably located within the host vehicle. The coordinate system may also follow the road on which the vehicle travels and be expressed as $(x(t),y(t))$ where $x(t)$ is the distance along a road or lane on which the host vehicle travels from the host vehicle to the external object and $y(t)$ is the lateral distance in a direction perpendicular to the extension of the road from the host vehicle to the external object. Alternatively, the coordinate system may have centre of the lane on which the host vehicle is positioned as the origin. Any of these coordinate systems may be used since there is a straight forward linear transformation between the coordinate systems. A host vehicle movement determination unit 4 determines a relative movement of said host vehicle 1 to a ground-fixed coordinate system. The external object movement determination unit 5 can be of any known type capable of determining at least the relative acceleration of the external objects to the host vehicle. Examples of suitable systems are tracking systems, such as for instance a system sold under the trade name MobilEye. Such systems will typically include radar or lidar and a camera, which are used to identify and track the object by use of filter algorithms. This system may also keep track of the external objects relative to the vehicle. By the information retrieved from the external object movement determination unit, which is the movement of the external objects $(x(t),y(t))_{external}$ and the information retrieved from the host vehicle movement determination unit, which is the movement $(X(t),Y(t))_{host}$ of the host vehicle relatively to a ground-fixed coordinate system, the movement of the external objects can be expressed in the ground-fixed coordinate system as $(X(t),Y(t))_{external}$. The absolute acceleration of the external objects $(\ddot{X}(t), \ddot{Y}(t))$ may be derived from a state observer in a Kalman filter process observing the location of the external objects relatively to the host vehicle. The acceleration may first be determined in relation to the host vehicle and thereafter transformed into the absolute ground-fixed coordinate system, alternatively the acceleration may be determined directly in the absolute coordinate system.

Preferably, the absolute acceleration of the external objects $(\ddot{X}(t), \ddot{Y}(t))$ is determined as an average value of the acceleration within a time window $\bullet t$. Suitably, the absolute acceleration $a_{abs}$ is defined as $a_{abs}=\bullet v/\bullet t$, where $\bullet v$ is the difference in velocity relative to a ground-fixed coordinate system. The time window is suitably selected to be an interval having an extension between 0.2 and 5, seconds, suitably between 1-3 seconds, preferably around 2 seconds. Hence

$$a_{abs}= \frac{\dot{X}(t+\Delta t) - \dot{X}(t), \dot{Y}(t+\Delta t) - \dot{Y}(t)}{\Delta t}, \quad \text{for}$$

$\bullet t$ selected as above.

Alternatively the external object movement determination unit 5 may solely determine the relative acceleration of the external objects relatively to the host vehicle. A straight forward coordinate transformation into an absolute ground-fixed coordinate system would then give sufficient information to operate the invention. For the purpose of determining the relative acceleration of an external object relatively to the vehicle, the use of a radar or lidar may be sufficient. With the use of a more complex tracking system, it will be possible to keep track of the locations of the external objects relative to the host vehicle. The host vehicle movement determination unit 4 may be of any known type capable of determining the acceleration of the host vehicle relative to a ground-fixed coordinate system.

A common approach to determine the movement of the host vehicle is to register the velocity of the vehicle by use of sensor and register the yaw rate of the vehicle by a sensor. It may also be possible to rely on input data from a GPS sensor. Once the movement of the host vehicle relative to the ground is known, the relative acceleration may be determined. A unit 6 uses the output signals from units 4 and 5 respectively to calculate a measure of a relative acceleration of said external objects to said ground-fixed coordinate system. The units 4, 5 and 6 may all be part of a state observer which has the relative acceleration of the external objects to a ground-fixed coordinate system as observers.

The output signal from unit 6 subsequently enters a warning signal generator 7 that generates a warning signal in case when said measure of absolute acceleration of said external objects relative to said fixed ground acceleration system determined by unit 6 in the sensor detection area 3 exceeds a threshold value. The warning may be communicated to the driver of the host vehicle 1 by a text message, a symbol message, a sound message, a haptic feedback or by any other means known in the prior art, alternatively the warning may be communicated to an active safety system that generates an intervention by controlling the movement of the vehicle, for instance by accelerating, braking or steering the host vehicle.

In a preferred embodiment of the invention, the threshold value is in the interval 6.8-7.2 m/s$^2$. The threshold value in this interval gives an optimal balance between the efficiency of the system and the rate of unnecessary warnings.

In a preferred embodiment of the invention the time interval when the relative acceleration exceeds the threshold value is 1-3 s.

The threshold value is a vector value where the magnitude of the threshold value is dependent on the direction of the acceleration in relation to the heading angle of the external object.

Optionally, the threshold value is a vector value where the magnitude of the threshold value may dependent on the direction of the acceleration in relation to the extension of the road on which the external object travels. This enables the system to have different threshold values in a direction transverse to the road as compared to the threshold value along the road.

Optionally, the threshold value is a vector value where the magnitude of the threshold value is dependent on the direction of the acceleration in relation to the direction of movement of the host vehicle. This enables the system to have different threshold values for objects that are approaching or diverging from the vehicle.

Optionally, the magnitude of the threshold value is dependent on the position of the external object relatively to the host vehicle.

The following examples illustrate traffic scenarios when a warning at an earlier point in time is beneficial.

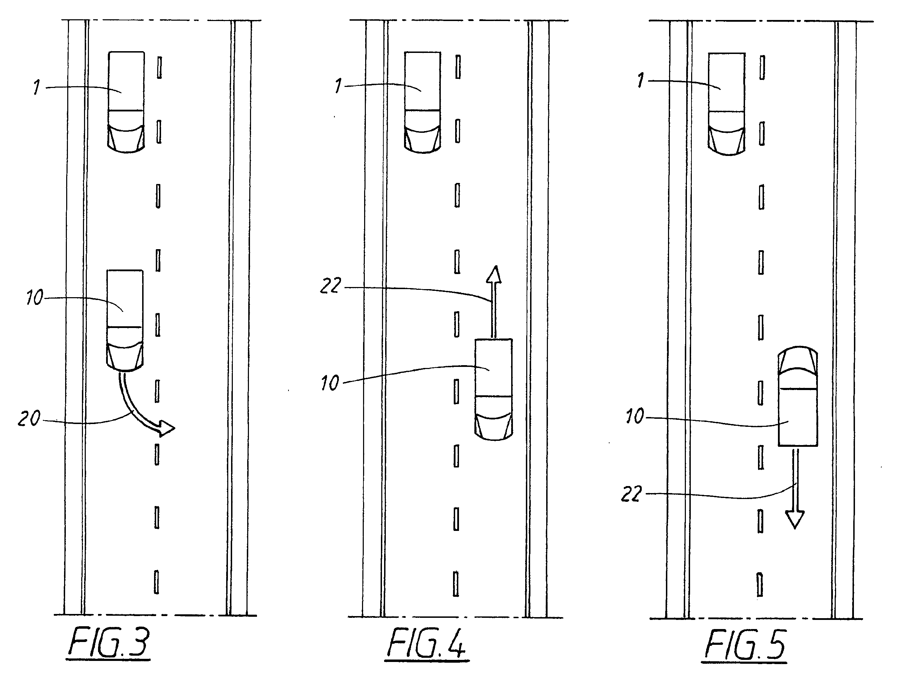

Fig. 3 shows the host vehicle 1 driving in a constant, high velocity on a highway. Suddenly, the lead vehicles 10 makes as sharp turn to the left as indicated by arrow 20. A sharp turn results in a high absolute acceleration of the lead vehicle relatively to a ground-fixed system. This high acceleration is detected by the onboard warning system according to the invention which may generate a warning signal irrespectively of whether a threat has been discovered by an active safety system. The presence of an active safety system determining a threat level from external objects is not necessary for the invention. As can be understood from the example in Fig. 3, the lead vehicle is actually moving away from the host vehicle. If an active safety system were present, the threat level from the lead vehicle would be reduced. The onboard warning system according to the invention reacts to the fact that the lead vehicle 10 is subjected to a high absolute acceleration relatively to a ground-fixed coordinate system. Provided that the threshold value for the acceleration is properly set, the onboard warning system will be able to discover an unusual event which may lead to an accident. One reason for the lead vehicle to perform an unexpected maneuver may be that an object, not detected by an active safety system, if present in the host vehicle, arranged to determine the threat level of external objects, is present in front of the lead vehicle 10. Other reasons for the sharp turn may also exist. It will also be likely that the lead vehicle will make a consecutive sharp turn in the opposite direction in order to stay on the road. By generating a warning signal based on only the presence of a high absolute acceleration of the external object, without any consideration of a threat level imposed by the external object, the warning could be generated already at the first turn and not only if the lead vehicle makes another sharp turn towards the host vehicle.

Fig. 4 shows the host vehicle 1 driving in a constant, high velocity on a highway. Suddenly, the lead vehicle 10 radically reduces its speed as indicated by arrow 22 and causing the absolute acceleration exceeding the threshold value. The onboard warning system according to the present invention should in this case provide a warning signal. Even if the threat level from the vehicles observed may be low at this instant since the lead vehicle is present in a neighboring lane, the situation may have aroused due to the fact that the driver of the lead vehicle has discovered a potential danger, such as a slow moving object in its own lane. The onboard warning system according to the invention may thus generate a warning signal also in this case, where actually the lead vehicle 10 itself does not impose any threat to the host vehicle.

The same situation applies to the traffic scenario in Fig. 5, where the host vehicle and the other vehicle are present in different lanes and heading towards each other.

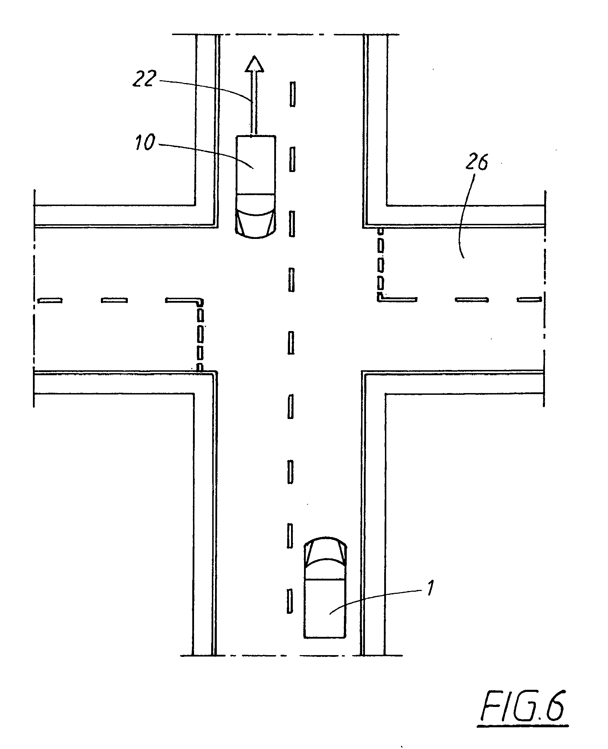

In Fig. 6 a traffic situation at a crossing is shown. The host vehicle 1 and an external vehicle 22 are approaching the crossing from opposite directions. Suddenly the external vehicle 22 brakes hard as indicated by the arrow 22 and causing the absolute acceleration exceeding the threshold value. The onboard warning system according to the present invention should in this case provide a warning signal. Even if the threat level from the vehicles observed may be low at this instant since the external vehicle is present in a neighboring lane, the situation may have aroused due to the fact that the driver of the lead vehicle has discovered a potential danger, such as a fast moving vehicle approaching the crossing from the crossing road 26. The onboard warning system according to the invention may thus generate a warning signal also in this case, where actually the external vehicle 10 itself does not impose any threat to the host vehicle.

An active safety system which considers the threat level for external objects relatively to the host vehicle may be arranged complementary to the onboard warning system according to the invention. An active safety system normally establishes a threat level assigned to external objects. The threat level is a measure of how dangerous the situation is. The thereat level is normally normalised such that the value 1 indicates that a collision can not be avoided by maximum steering or breaking. A threat level 0 will indicate that it is impossible to collide with the object due to the physical constraints of the vehicle such as acceleration and steering capacity. The threat level is thus an indicator of how much of the capability to manoeuvre of the vehicle must be used in order to avoid a collision. Normally interventions are performed at a certain level below 1, for instance between 0.7 and 0.9. In order to assign a threat level the future paths of the vehicles must be conflicting with each other in some respect. Future paths may be predicted by a conventional vehicle tracking system.

It this event the warning generated by the warning signal generator may influence threshold values set in the active safety system such that an intervention may be performed earlier. It would be particularly advantageous if the threshold values are influenced such that the greater the acceleration of the external object relatively to the ground-fixed coordinate system, the greater influence on threshold values set in the active safety system is obtained.

On the other hand, for unit 6 for determination of a measure of a relative acceleration of said external objects to said ground-fixed coordinate system and the warning unit connected to the system, it is not necessary for the external objects to have a conflicting path with the host vehicle. A warning signal will be generated for any object in the detection area which accelerates, decelerates or steers such that its relative acceleration to said ground-fixed coordinate system is above a threshold value.

As indicated above, unit 6 for determination of a measure of a relative acceleration of said external objects to said ground-fixed coordinate system and the warning unit connected to the system may be connected to a conventional active safety system, which may intervene in the event the threat level is above a threshold value. Preferably, the connection is of the type such that the threshold values of the active safety system may be set in dependence of the detected level of acceleration of external objects relatively to the ground-fixed coordinate system, such that lower threat levels than normal will generate an intervention in this case.

When determining if an intervention (warning/braking/steering) shall be given by an active safety system, a number of things are normally taken into consideration.

First, the threat level is estimated, describing the effort required from the vehicles that are involved in the situation. A focus is put on the effort required by the host vehicle.

Second, the state of the driver of the host vehicle is considered, describing whether the driver is tired, distracted or inexperienced.

Another important factor to evaluate is the intention of the driver of the host vehicle, describing whether the driver is overtaking another vehicle, departing from the lane on purpose, etc.

Finally, it is of importance to estimate the expected damage if an accident occurs. The expected damage usually only depends on the type of accident, e.g. rear-end collision or frontal collision.

However, an accident is always preceded by a sequence of events. It is claimed that the timing for correct interventions can be significantly improved and that the number of false alarms can be reduced by taking the traffic scenario, i.e. the sequence of events, into consideration.

To achieve this, an algorithm that evaluates and classifies events in the traffic shall be constructed. Assume that a rare event or a rare sequence of events like the ones described in the drawings is detected and these events are determined to cause a large increase in the threat level. In such case, an intervention shall be given with a different timing than if the events are common in everyday traffic.

In particular, interventions shall be given at an early point in time if surrounding vehicles suddenly puts the host vehicle at risk. Clearly, the driver of the host vehicle did not anticipate these scenarios, nor was there any intention by the driver of the host vehicle to put the host vehicle in a situation where a rather large effort is required to avoid an accident. It is thus reasonable to assume that providing very early interventions when these types of traffic scenarios are detected will give a system with higher effectiveness without increasing the number of false alarms.

**Claims**

1. An onboard warning system for a host vehicle (1), a system comprising a sensor system detecting a presence of external objects (2) within a sensor detection area (3) and an external object movement determination unit (5) arranged to determine a measure of a relative movement of said external objects to said host vehicle, the warning system further includes:

   a host vehicle movement determination unit (4) arranged to determine a relative movement of said host vehicle to a ground-fixed coordinate system;
   a unit (6) for determination of a measure of an absolute acceleration of said external objects to said ground-fixed coordinate system by transformation of the measure of the relative movement of said external objects to said host vehicle into said ground-fixed coordinate system using the relative movement of said host vehicle determined by said host vehicle movement determination unit; and
   a warning signal generator (7) arranged to generate a warning signal when said measure of said absolute acceleration of said external objects relative to said ground-fixed coordinate system in the sensor detection area exceeds a threshold value

2. An onboard warning system according to claim 1, *characterized in* **that** said external object movement determination unit is arranged to determine a current heading direction of said external objects.

3. An onboard warning system according to claim 1, *characterized in* **that** said threshold relative acceleration value is 4-10 m/s$^2$, preferably 6.5-8 m/s$^2$, and still more preferably 6.8-7.2 m/s$^2$.

4. An onboard warning system according to claim 1, *characterized in* **that** said threshold relative acceleration value is detected under the time interval of 0.5-5 s, preferably 1-3 s.

5. An onboard warning system according to claim 1, *characterized in* that said measure of said absolute acceleration of said external objects is a vector value.

6. An onboard warning system according to claim 5, *characterized in* that said threshold value is a vector value where the magnitude of the threshold value is dependent on the direction of the acceleration in relation to the heading angle of the external object.

7. An onboard warning system according to claim 5 or 6, *characterized in* that said threshold value is a vector value where the magnitude of the threshold value is dependent on the direction of the acceleration in relation to the extension of the road on which the external object travels.

8. An onboard warning system according to claim 5, 6 or 7 *characterized in* that said threshold value is a vector value where the magnitude of the threshold value is dependent on the direction of the acceleration in relation to the direction of movement of the host vehicle.

9. An onboard warning system according to any of the preceding claims, *characterized in* that the magnitude of the threshold value is dependent on the position of the external object relatively to the host vehicle.

10. An onboard warning system according to any of claims 1-6, *characterized in* that the warning signal generator (7) is arranged to generate said warning signal without any consideration of which threat level the external object which absolute acceleration exceeds said threshold value imposes on the host vehicle.

11. An onboard warning system according to any of claims 1-7, *characterized in* that the warning signal generator (7) is arranged to generate said warning signal solely in dependence of whether said absolute acceleration exceeds said threshold value.

**Patentansprüche**

1. Fahrzeugeigenes Warnsystem für ein Host-Fahrzeug (1), ein System mit einem Sensorsystem, das die Gegenwart von externen Objekten (2) innerhalb eines Sensordetektionsbereichs (3) detektiert und mit einer Bewegungsbestimmungseinheit (5) für externe Objekte, die eingerichtet ist, um ein Größenwert einer relativen Bewegung der externen Objekte zu dem Host-Fahrzeug zu bestimmen, wobei das Warnsystem des Weiteren aufweist:

eine Bestimmungseinheit (4) für die Host-Fahrzeugbewegung, die eingerichtet ist, um eine relative Bewegung des Host-Fahrzeugs zu einem erdfesten Koordinatensystem zu bestimmen; eine Einheit (6) zur Bestimmung eines Größenwerts einer absoluten Beschleunigung der externen Objekte zu dem erdgebundenen Koordinatensystem durch Transformation des Größenwerts der relativen Bewegung der externen Objekte zu dem Host-Fahrzeug in das erdgebundene Koordinatensystem unter Verwendung der relativen Bewegung des Host-Fahrzeugs, die durch die Host-Fahrzeugbewegungsbestimmungseinheit bestimmt wird; und ein Warnsignalgenerator (7), der eingerichtet ist, um ein Warnsignal zu erzeugen, wenn der Größenwert der absoluten Beschleunigung des externen Objekts relativ zu dem erdgebundenen Koordinatensystem in dem Sensordetektionsbereich einen Grenzwert überschreitet.

2. Fahrzeugeigenes Warnsystem gemäß Anspruch 1, **dadurch gekennzeichnet, dass** die Bewegungsbestimmungseinheit für externe Objekte eingerichtet ist, um eine aktuelle Bewegungsrichtung der externen Objekte zu bestimmen.

3. Fahrzeugeigenes Warnsystem gemäß Anspruch 1, **dadurch gekennzeichnet, dass** der relative Beschleunigungsgrenzwert 4-10 m/s$^2$ ist, bevorzugt 6,5-8 m/s$^2$ und noch bevorzugter 6,8-7,2 m/s$^2$ ist.

4. Fahrzeugeigenes Warnsystem gemäß Anspruch 1, **dadurch gekennzeichnet, dass** der relative Beschleunigungsgrenzwert in dem Zeitintervall von 0,5-5 s, bevorzugt 1-3 s, detektiert wird.

5. Fahrzeugeigenes Warnsystem gemäß Anspruch 1, **dadurch gekennzeichnet, dass** der Größenwert der absoluten Beschleunigung der externen Objekte ein Vektorwert ist.

6. Fahrzeugeigenes Warnsystem gemäß Anspruch 5, **dadurch gekennzeichnet, dass** der Grenzwert ein Vektorwert ist, wobei die Höhe des Grenzwerts von der Richtung der Beschleunigung in Bezug zu dem Bewegungsrichtungswinkel des externen Objekts abhängig ist.

7. Fahrzeugeigenes Warnsystem gemäß Anspruch 5 oder 6, **dadurch gekennzeichnet, dass** der Grenzwert ein Vektorwert ist, wobei die Höhe des Grenzwerts von der Richtung der Beschleunigung in Bezug zu der Erstreckung der Straße, auf der sich das externe Objekt bewegt, abhängig ist.

**8.** Fahrzeugeigenes Warnsystem gemäß Anspruch 5, 6 oder 7, **dadurch gekennzeichnet, dass** der Grenzwert ein Vektorwert ist, wobei die Höhe des Grenzwerts von der Beschleunigungsrichtung im Verhältnis zu der Bewegungsrichtung des Host-Fahrzeugs abhängig ist.

**9.** Fahrzeugeigenes Warnsystem gemäß einem der vorstehenden Ansprüche, **dadurch gekennzeichnet, dass** die Höhe des Grenzwerts von der Position der externen Objekte relativ zu dem Host-Fahrzeug abhängig ist.

**10.** Fahrzeugeigenes Warnsystem gemäß einem der Ansprüche 1-6, **dadurch gekennzeichnet, dass** der Warnsignalgenerator (7) eingerichtet ist, um das Warnsignal ohne Berücksichtigung, welches Bedrohungsniveau das externe Objekt, dessen absolute Beschleunigung den Grenzwert überschreitet, dem Host-Fahrzeug auferlegt, zu erzeugen.

**11.** Fahrzeugeigenes Warnsystem gemäß einem der Ansprüche 1-7, **dadurch gekennzeichnet, dass** der Warnsignalgenerator (7) eingerichtet ist, um das Warnsignal alleine in Abhängigkeit davon zu erzeugen, ob der absolute Beschleunigungswert den Grenzwert überschreitet.

**Revendications**

**1.** Système d'avertissement embarqué pour un véhicule hôte (1), un système comprenant un système de capteur détectant la présence d'objets externes (2) dans une zone de détection de capteur (3) et une unité de détermination de mouvement d'objet externe (5) configurée pour déterminer une mesure d'un mouvement relatif desdits objets externes par rapport audit véhicule hôte, le système d'avertissement comprend en outre :

une unité de détermination de mouvement de véhicule hôte (4) configurée pour déterminer un mouvement relatif dudit véhicule hôte par rapport à un système de coordonnées fixe terrestre ;
une unité (6) pour détermination d'une mesure d'une accélération absolue desdits objets externes audit système de coordonnées fixes terrestre par transformation de la mesure du mouvement relatif desdits objets externes par rapport audit véhicule hôte dans ledit système de coordonnées fixes terrestre en utilisant le mouvement relatif dudit véhicule hôte déterminé par ladite unité de détermination de mouvement de véhicule hôte ; et
un générateur de signal d'avertissement (7) configuré pour générer un signal d'avertissement lorsque ladite mesure de ladite accélération absolue desdits objets externes par rapport audit système de coordonnées fixes terrestre dans la zone de détection de capteur dépasse une valeur de seuil.

**2.** Système d'avertissement embarqué selon la revendication 1, **caractérisé en ce que** ladite unité de détermination de mouvement d'objet externe est configurée pour déterminer une direction avant actuelle desdits objets externes.

**3.** Système d'avertissement embarqué selon la revendication 1, **caractérisé en ce que** ladite valeur de seuil d'accélération relative est de 4 à 10 m/s$^2$, de préférence 6,5 à 8 m/s$^2$, et encore plus préférablement de 6,8 à 7,2 m/s$^2$.

**4.** Système d'avertissement embarqué selon la revendication 1, **caractérisé en ce que** ladite valeur de seuil d'accélération relative est détectée dans l'intervalle de temps de 0,5 à 5 s, de préférence 1 à 3 s.

**5.** Système d'avertissement embarqué selon la revendication 1, **caractérisé en ce que** ladite mesure de ladite accélération absolue desdits objets externes est une valeur vectorielle.

**6.** Système d'avertissement embarqué selon la revendication 5, **caractérisé en ce que** ladite valeur de seuil est une valeur vectorielle où l'amplitude de la valeur de seuil est dépendante de la direction de l'accélération par rapport à l'angle avant de l'objet externe.

**7.** Système d'avertissement embarqué selon la revendication 5 ou 6, **caractérisé en ce que** ladite valeur de seuil est une valeur vectorielle où l'amplitude de la valeur de seuil est dépendante de la direction de l'accélération par rapport à l'extension de la route sur laquelle l'objet externe se déplace.

**8.** Système d'avertissement embarqué selon la revendication 5, 6 ou 7 **caractérisé en ce que** ladite valeur de seuil est une valeur vectorielle où l'amplitude de la valeur de seuil est dépendante de la direction de l'accélération par rapport à la direction de mouvement du véhicule hôte.

**9.** Système d'avertissement embarqué selon l'une quelconque des revendications précédentes, **caractérisé en ce que** l'amplitude de la valeur de seuil est dépendante de la position de l'objet externe par rapport au véhicule hôte.

**10.** Système d'avertissement embarqué selon l'une quelconque des revendications 1 à 6, **caractérisé en ce que** le générateur de signal d'avertissement (7) est configuré pour générer ledit signal d'avertissement sans tenir aucunement compte du niveau de danger que l'objet externe dont l'accélération absolue dépasse ladite valeur de seuil constitue pour le véhicule hôte.

11. Système d'avertissement embarqué selon l'une quelconque des revendications 1 à 7, **caractérisé en ce que** le générateur de signal d'avertissement (7) est configuré pour générer ledit signal d'avertissement uniquement en dépendance du fait que ladite accélération absolue dépasse ou non ladite valeur de seuil.

*FIG.1*

WARNING SIGNAL GENERATION 7

ABSOLUTE ACCELERATION OF EXTERNAL OBJECTS TO A GROUND FIXED COORDINATE SYSTEM 6

RELATIVE MOVEMENT OF EXTERNAL OBJECTS TO HOST VEHICLE 5

RELATIVE MOVEMENT OF HOST VEHICLE TO A GROUND FIXED COORDINATE SYSTEM 4

FIG.2

12

_FIG.3_

_FIG.4_

_FIG.5_

EP 2 172 920 B1

FIG.6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2835081

- US 20070282530 A1